# EUROPEAN PATENT SPECIFICATION

(11) **EP 1 625 496 B1**
(45) Date of publication and mention of the grant of the patent: **07.04.2010**
(21) Application number: 04702019.3
(22) Date of filing: 14.01.2004
(51) Int. Cl.: G06F 9/445

(54) **METHODS AND APPARATUS FOR GENERATING UPGRADED SOFTWARE FROM INITIAL SOFTWARE AND SOFTWARE UPGRADE PACKAGES**
VERFAHREN UND VORRICHTUNG ZUM ERZEUGEN AKTUALISIERTER SOFTWARE, VON DER AUSGANGS-SOFTWARE UND DEN SOFTWARE AKTUALISIERUNGSKATALOGEN
PROCEDES ET APPAREILS PERMETTANT DE GENERER DES MISES A JOUR LOGICIELLES A PARTIR DES PROGICIELS D'ORIGINE ET DE LEURS MISES A JOUR

(30) Priority: 19.05.2003 US 440910
(43) Date of publication of application: 15.02.2006
(73) Proprietor: Sony Ericsson Mobile Communications AB, 221 88 Lund (SE)
(72) Inventor: HOMILLER, Daniel, P., Cary, NC 27513 (US)
(74) Representative: Chamberlain, Alan James
(86) International application number: PCT/IB2004/000147
(87) International publication number: WO 2004/102382

(56) References cited:
- EP-A- 0 950 949
- EP-A- 1 083 482
- US-A- 5 837 986
- US-A- 6 023 620
- US-A1- 2003 023 964
- US-B1- 6 438 748
- US-B1- 6 546 492

## Description

### BACKGROUND OF THE INVENTION

The present invention relates to wireless terminals that operate according to internally stored software and, more particularly, to methods for upgrading software in wireless terminals, such as cellular radiotelephones.

Consumer wireless terminals, such as cellular terminals, are generally preprogrammed with software in a non-volatile memory (in which case the software is often called firmware) before they are shipped by a manufacturer. For cellular terminals, the software generally defines a wireless communication protocol, an operating system, and applications such as games, phone book, and email. The software may be loaded into the non-volatile memory before the memory is installed in the cellular terminal, or the software may be loaded afterwards, such as during a testing phase of a manufacturing process. For example, test software may be loaded into the cellular terminal to support testing and, when the cellular terminal passes the testing, operational software may then be loaded.

Manufacturers frequently seek to provide users added features to expand the utility of the wireless terminals, or to remedy potential or actual problems with the operation of the devices. In many such instances, it may be necessary to upgrade the software in the device by loading upgraded software as a substitute for pre-loaded software. Sometimes, the upgrade can be performed during manufacturing, prior to packaging and delivery. However, sometimes it may be necessary to upgrade the software while the device is in the manufacturer's inventory, in distribution facilities, or in a wholesale customers' inventory. Sometimes, upgrading software necessitates unpacking the consumer wireless terminals, re-programming the software, verifying the software, and repacking the devices.

Loading software into a non-volatile memory may take a significant amount of time due to, for example, the long write cycle times and associated slow write operations with many non-volatile memories (e.g., EEPROMS and Flash-EEPROMS). For example, it can take 3 to 12 minutes to load software into a cellular terminal. The amount of time that is required to complete a software upgrade effort can be a major component of the resulting cost of the effort. Upgrading software can become very expensive when it is necessary to load software into thousands, or even hundreds of thousands of consumer wireless terminals.

Some approaches for reducing the cost of upgrading software include reducing the software loading time by using non-volatile memories having faster write cycles and/or using faster data connections between a software programmer and the consumer devices. Some other approaches include using software programming devices that are capable of simultaneously upgrading the software in many wireless terminals.

EP 1 083 482 discloses a method for updating software in mobile phones based on the comparison of versions while the phone is in operation. US 5 837 986 discloses a method of updating software via a file containing the differences between the old and new software.

### SUMMARY OF THE INVENTION

Embodiments of the present invention provide a method of upgrading software in a wireless terminal. An initial version of software is provided in at least one memory in the wireless terminal. A software upgrade package is then transferred into memory by a manufacturer of the wireless terminal. An upgraded version of software is then generated in the wireless terminal from the initial version of software and the software upgrade package in response to a predetermined event that occurs with use of the wireless terminal by an end user, and the upgraded version of software is stored in the wireless terminal memory. The wireless terminal may then be operated according to the upgraded version of software.

In this manner, a manufacturer may load an initial version of software into the wireless terminal. When the manufacturer desires to upgrade (i.e., modify) the initial version of software, a software upgrade package may be generated and loaded into the wireless terminal. The software upgrade package may contain instructions and data that may be used by the wireless terminal to generate an upgraded version of software within the wireless terminal from the initial version of software and the software upgrade package. The software upgrade package may be substantially smaller than the initial version of software, and may therefore be loaded into the wireless terminal in substantially less time than may be needed to load the initial version of software.

The generation of the upgraded version of software within the wireless terminal is delayed until the occurrence of a later predetermined event that occurs with use of the wireless terminal by an end user. Accordingly, a portion of the time that is needed for upgrading the software in the wireless terminal, and possibly a majority of the total upgrade time, may be shifted away from the manufacturer.

### BRIEF DESCRIPTION OF THE DRAWINGS

**Figure 1** is a schematic block diagram illustrating a software download manager, a wireless terminal, and a wireless network according to some embodiments of the present invention.
**Figure 2** is a schematic block diagram of a software upgrade generator according to embodiments of the present invention.
**Figure 3** is a schematic block diagram of the processor of **Figure 1** according to embodiments of the present invention.
**Figure 4** is a flow chart illustrating operations for generating an upgraded version of software according to embodiments of the present invention.

### DETAILED DESCRIPTION

The present invention now will be described more fully hereinafter with reference to the accompanying drawings, in which embodiments of the invention are shown. However, this invention should not be construed as limited to the embodiments set forth herein. Rather, these embodiments are provided so that this disclosure will be thorough and complete, and will fully convey the scope of the invention to those skilled in the art. Like numbers refer to like elements throughout.

It also will be understood that, as used herein, the term "comprising" or "comprises" is open-ended, and includes one or more stated elements, steps and/or functions without precluding one or more unstated elements, steps and/or functions.

The present invention is described below with reference to block diagrams and/or operational illustrations of methods and wireless terminals according to embodiments of the invention. It is understood that each block of the block diagrams and/or operational illustrations, and combinations of blocks in the block diagrams and/or operational illustrations, can be implemented by radio frequency, analog and/or digital hardware, and/or computer program instructions. These computer program instructions may be provided to a processor of a general purpose computer, special purpose computer, ASIC, and/or other programmable data processing apparatus in a wireless terminal, such that the instructions, which execute via the processor of the computer and/or other programmable data processing apparatus, create means for implementing the functions/acts specified in the block diagrams and/or operational block or blocks. In some alternate implementations, the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved.

It should be understood, that, as used herein, the term "wireless terminal" may include a cellular radiotelephone with or without a multi-line display; a Personal Communications System (PCS) terminal that may combine a cellular radiotelephone with data processing, facsimile and data communications capabilities; a Personal Data Assistant (PDA) that can include a radiotelephone, pager, Internet/intranet access, Web browser, organizer, calendar and/or a global positioning system (GPS) receiver; and a conventional laptop and/or palmtop portable computer that includes a radiotelephone transceiver.

It should be also be understood, that as used herein, the term "memory" may refer to one or more physical units or to more than one type of physical memory. A wireless terminal may contain several types of memory, including RAM and non-volatile memory, and each type of memory may further be divided into more than one physical unit. Some or all of the RAM, for example, may actually be located on the same integrated circuit as the processor. Likewise, any of the processing functions described herein may in fact be performed by a combination of processors, so the term "processor" as used herein refers to at least one processor.

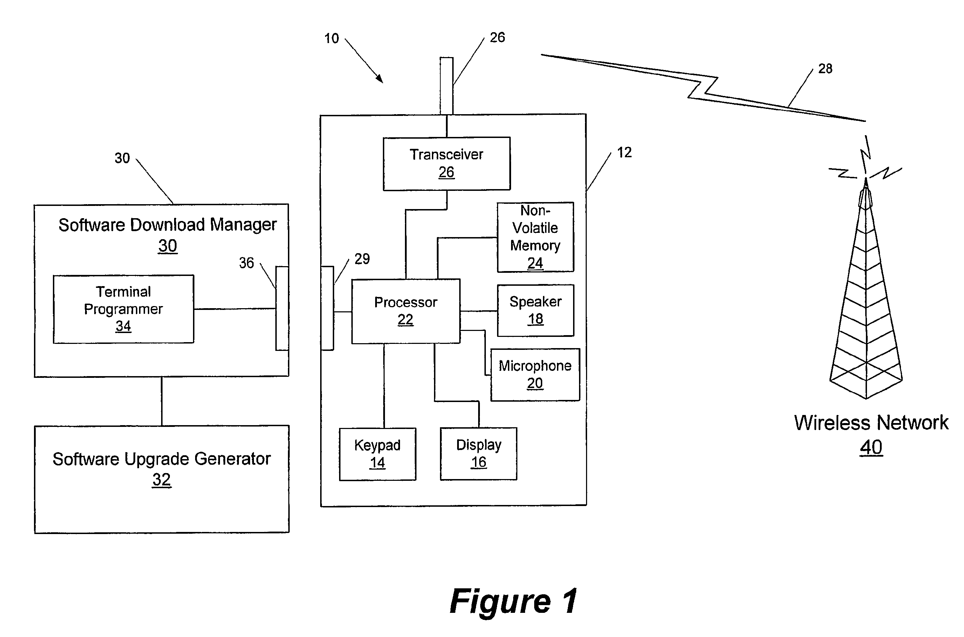

Various embodiments of the present invention will now be described with reference to the schematic block diagram of **Figure 1** that illustrates an exemplary wireless communication system that includes a wireless terminal **10,** a software upgrade generator **32,** a software download manager **30,** and a wireless communications network **40.**

Using the software download manager **30,** a manufacturer may load an initial version of software into the wireless terminal **10.** When the manufacturer desires to upgrade (i.e., modify) the initial version of software, a software upgrade package is generated by the software upgrade generator **32,** and loaded into the wireless terminal **10** via the download manager **30.** This loading of the software upgrade package into the wireless terminal **10** may be performed using the same download manager **30** as was used for loading the initial version, or by another system of equivalent functionality. The software upgrade package may contain instructions and data that may be used by the wireless terminal **10** to generate an upgraded version of software within the wireless terminal **10** from the initial version of software and the software upgrade package. The software upgrade package may be substantially smaller than the initial version of software, and may therefore be loaded into the wireless terminal **10** in substantially less time than was needed to load the initial version of software.

The generation of the upgraded version of software within the wireless terminal **10** may then be delayed until the occurrence of a latter predefined event that occurs with use of the wireless terminal **10** by an end user (i.e., customer). For example, the predefined event may occur after the wireless terminal **10** is sold to an end user, taken out of its packaging, and initially used. Alternatively, a signal may be transmitted to the wireless terminal **10** from the wireless network **40** to trigger the generation of the upgraded version of software within the wireless terminal **10.** Accordingly, a portion of the time that is needed for upgrading the software in the wireless terminal **10,** and possibly a majority of the total upgrade time, may be shifted away from the manufacturer. The time savings, and the associated cost savings, can be substantial for the manufacturer, for example, when the wireless terminals **10** are manufactured in high volumes.

The , software download manager **30,** the software upgrade generator **32**, the wireless terminal **10,** and the predefined events that cause the generation of the upgraded version of software in the wireless terminal **10** will now be described in further detail for some embodiments of the present invention.

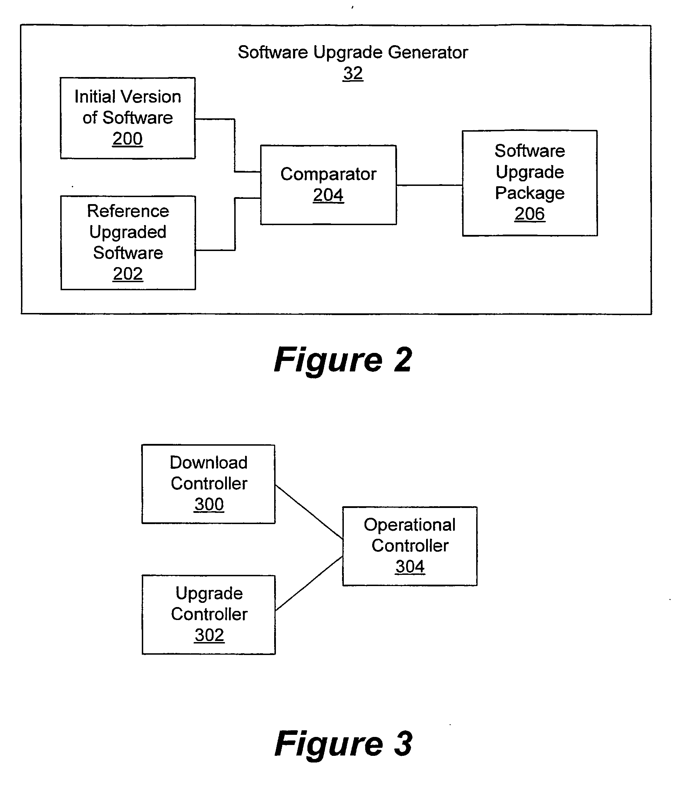

As illustrated in **Figure 1****,** the software download manager **30** may load an initial version of software into the wireless terminal **10** using a terminal programmer **34** that can be communicatively coupled through an electrical interface **36** to an electrical interface **29** in the wireless terminal **10.** In some other embodiments of the present invention, the software download manager **30** may include a wireless transmitter that is configured to transmit the software through a wireless interface, for example through the wireless network **40,** to the wireless terminal **10.** Alternative methods for transmitting the software between the software download manager **30** and the wireless terminal **10** include infrared communications and short-range wireless communications (e.g. wireless LAN or Bluetooth). Referring also to **Figure 2****,** when the manufacturer desires to upgrade (i.e., change) the software in the wireless terminal **10**, a software upgrade generator 32 may be used to generate a software upgrade package from an initial version of software **200** and a reference upgraded software **202.** The initial version of software **200** may be the software that is, or will be, initially loaded into the wireless terminal **10,** and the reference upgraded software **202** may be the desired upgraded software. A comparator **204** compares differences between the initial version of software **200** and the reference upgraded software **202,** and generates a software upgrade package **206.** Various algorithms embodied in the comparator **204** are well known and will not be further described herein.

The software upgrade package **206** may contain instructions and data that may be used by the wireless terminal **10** to generate an upgraded version of software within the wireless terminal **10** from the initial version of software **200** and the software upgrade package **206.** The software download manager **30** may then be used to load the software upgrade package **206** into the wireless terminal **10.** The software upgrade package **206** may be substantially smaller than the initial version of software, and may therefore be loaded into the wireless terminal **10** in substantially less time than would be needed to load the reference upgraded software **202.** Accordingly, the time needed to upgrade the software in the wireless terminal **10,** and associated cost of the upgrade, may be reduced by loading the software upgrade package **206** instead of the reference upgraded software **202.**

As illustrated in **Figure 1****,** the wireless terminal **10** may include a portable housing **12,** a keyboard/keypad **14,** a display **16,** a speaker **18,** and a microphone **20.** The wireless terminal **10** also includes a processor **22** and at least one non-volatile memory **24,** and may include a transceiver **26.** The non-volatile memory **24** may include one or more erasable programmable read-only memories (EPROM or Flash EPROM), battery-backed random access memory (RAM), magnetic, optical, or other digital storage device, and may be separate from, or at least partially within, the processor **22.** The transceiver **24** typically includes both a transmitter and a receiver to allow two way communications, but the present invention is not limited to such devices and, as used herein, a "transceiver" may include both a receiver and a transmitter or only one such communication circuit. The wireless terminal **10** may, thereby, communicate with the wireless communications network **40** using radio frequency signals. The radio frequency signals may be communicated through an antenna **26** over at least one communication channel **28** with the wireless communications network **40.**

The processor **22** may support various communication and application related functions of the wireless terminal **10** that are defined by the software in the memory **24.** Operating according to the software, the processor **22** may format communication signals for transmission over the communication channel **28** according to a wireless communication protocol and may interpret formatted communication signals received over the communication channel. (The term "communication channel" is used herein in a broad sense, transmission and reception may actually occur over the same or separate logical or physical channels.) The wireless communication protocol may include operations for establishing the communication channel **28** as a communication connection with the wireless network **40,** maintaining the communication connection, formatting voice (speech) signals from the microphone **20** to digital communication signals that are suitable for transmission over the communication channel **28** (i.e., voice coding), and/or formatting voice signals that are received over the communication channel **28** to a form suitable for output by the speaker **18** (i.e., voice decoding). The formatted communication signals may include both traffic (voice and/or data) and control signals (*e.g*., paging signals/messages for incoming calls). Examples of wireless communication protocols for use with embodiments of the present invention include, ANSI-136, GSM, code division multiple access (CDMA), wideband-CDMA, CDMA2000, Enhanced Data rates for GSM Evolution (EDGE), Universal Mobile Telecommunications System (UMTS), Bluetooth, and wireless local area network (WLAN) protocols, including IEEE 802.11b, and the like. These and other wireless communication protocols are well known to those of skill in the art and will not be further described herein.

The software may also define operations for providing games to a user, playing music (e.g., mp3 or other formatted music), accessing a phone book that is internal to the wireless terminal **10,** and/or for generating, receiving, and/or displaying on the display **16** short message service messages, emails, data, digital pictures, and/or video.

As illustrated in **Figure 3****,** the processor **22** may include a download controller **300,** an upgrade controller **302,** and an operational controller **304.** The controllers **300, 302,** and **304** may be separate circuits or may share at least some, or all, common circuitry, and/or may be instructions that are provided to a general purpose computer, special purpose computer, ASIC, and/or other programmable data processing apparatus. The download controller **300** may be configured to load (i.e. receive) the initial version of software and/or the software upgrade package from the electrical interface **29** to the non-volatile memory **24.** The software upgrade package may be loaded into the same memory as the initial version of software and/or a separate memory.

In other embodiments of the present invention, the initial version of software and/or the software upgrade package may be loaded into the non-volatile memory **24** before it is assembled in the wireless terminal **10.** In still other embodiments of the present invention, the download controller **300** may be configured to receive the initial version of software and/or the software upgrade package, via the antenna **26** and transceiver **24,** from the wireless network **40** over the communication channel **28,** and to load the received software into the non-volatile memory **24.**

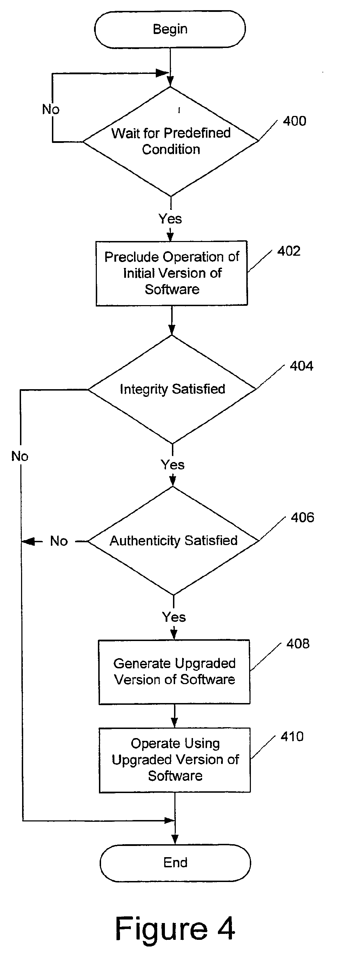

The upgrade controller **302** may be configured to generate an upgraded version of software from the initial version of software and the software upgrade package. In some embodiments of the present invention, the upgrade controller **302** may follow the operations that are illustrated in **Figure 4** to generate an upgraded version of software. With reference to **Figure 4** at Block **400,** the generation of an upgraded version of software is delayed until after the occurrence of a predefined condition.

The predefined condition may be when the wireless terminal **10** is first connected to a power source, such as a battery and/or an external power source, after it has been earlier loaded with the initial version of software and the software upgrade package and then disconnected from a power source. Typically, a user is instructed by the manufacturer (via a manual provided with the wireless terminal) to connect a battery to wireless terminal **10,** and to fully charge the battery before using the wireless terminal **10.** Connection of the battery and/or an external power source to the wireless terminal **10** may initiate the generation of an upgraded version of software when a software upgrade package is present.

The predefined condition may be responsive to an initial setup of the wireless terminal **10.** For example, the wireless terminal **10** may initiate the generation of an upgraded version of software when it attempts to register and/or become activated with the wireless network **40** according to a wireless communication protocol that is defined by the initial version of software. The operations for activating a cellular wireless terminal for use with a home cellular network and for registering a cellular wireless terminal with a cellular network are well known and will not be further described herein. In another example, the initial setup of the wireless terminal **10** may be operations that are performed by the wireless terminal **10** before a first use by a user.

The generation of an upgraded version of software may be responsive to an upgrade command that is received from the wireless network **40** over the communication channel **28.** The wireless network **40** may communicate the upgrade command to wireless terminals based on their attempt to be activated and/or to register with the wireless network **40.** The wireless network **40** may first determine an identity of a wireless terminal, such as its serial number, model number, and/or manufacturer, and may further identify a version or other indication of the type of software used by the wireless terminal. The wireless terminals **40** may then use the information to determine whether a software upgrade is desired and to command the wireless terminal to upgrade its software.

At Block **402,** after the predefined condition is satisfied at Block **400,** further operation of the wireless terminal using the initial version of software may be precluded or stopped while an upgraded version of software is generated. Because the upgraded version of software may at least partially replace the initial version of software in the memory **24** during the upgrade, the memory **24** may contain an incomplete combination of the initial and upgraded versions of software. If the wireless terminal **10** were to operate according to such an incomplete combination, incorrectly formatted communication signals or other incorrect operation may result. Accordingly, it may be advantageous for the wireless terminal **10** to at least preclude/stop formatting communication signals using the initial version of software until the completion of the generation of the upgraded version of software in the memory **24.**

If the wireless terminal **10** is "ON" prior to an imminent software upgrade, or during a software upgrade, a message may be displayed to a user, such as "Configuring Phone Software", to alert the user that operation of the wireless terminal is precluded. The user may alternatively be permitted to start a software upgrade, schedule the start of a software upgrade for a latter time or other predefined event, and/or decline a software upgrade.

At Block **404,** the integrity of the software upgrade package may be verified, for example, by performing a parity check on the software, or by another operation, to check for errors. At Block **406,** the authenticity of the software upgrade package may be verified. The determination of authenticity may prevent the use of a software upgrade package that is intended for a different type of wireless terminal, and/or prevent the use of software that has been developed, or modified, by a non-authorized individual or entity. The determination of authenticity may be responsive to a comparison of information, such as an authorization key, with an authentication code in the wireless terminal **10.** The authorization key and/or authentication code may include a digital signature or pattern, sequence of patterns, and/or a computational result. The key or code may indicate a software version and/or source of the software, a manufacturer of the wireless terminal **10,** a model type (e.g., product model number or product family identify), and/or may uniquely identify the wireless terminal **10** (e.g., terminal identification number or serial number). The determination of authenticity may include the use of a decryption algorithm such as the well known RSA or SHA-1 algorithms. The authorization key and/or authentication code may be received from a user of the wireless terminal **10,** or may be received over the communication channel **28** from the wireless network **40,** or may be separately stored within the initial version of software and the software upgrade package in the wireless terminal **10.**

When the software upgrade package satisfies the integrity and authenticity verification at Blocks **404** and **406,** then at Block **408** an upgraded version of software is generated from the initial version of software and the software upgrade package. The software upgrade package may include instructions and/or data that are used to transform the initial version of software into the upgraded version of software. To conserve memory space, the upgraded version of software may be stored in the non-volatile memory **24** overwriting at least a portion of the initial version of software. However, to facilitate a revision to the initial version of software, for example if the generation of the upgraded software does not properly complete or otherwise does not satisfy an integrity verification, the upgraded software may be separately stored from the initial version of software. Alternatively, the software upgrade package may contain instructions and/or data for transforming upgraded software back to the initial version of software to facilitate such reversion.

At Block **410,** operation of the wireless terminal **10** is provided, at least in part, by the upgraded version of software. The upgraded version of software may define a wireless communication protocol that is used by the wireless terminal to format signals communicated with the wireless network **40,** and/or may define new or modified applications that may be used by the wireless terminal **10.**

Accordingly, software in a wireless terminal may be upgraded using an initial version of software and a software upgrade package. The software upgrade package may be substantially smaller than the initial version of software, and may, therefore; be loaded into the wireless terminal in substantially less time than may be needed to load the initial version of software. The software upgrade may then be delayed until the occurrence of a latter predefined event with the use of the wireless terminal by an end user. The predefined event may occur, for example, after the wireless terminal has been sold to an end-customer. Accordingly, a portion of the time that is needed for upgrading the software in the wireless terminal, and possibly a majority of the total upgrade time, may be shifted away from the manufacturer. The time savings, and associated cost savings, can be substantial for the manufacturer where the wireless terminals are manufactured in high volumes.

In the drawings and specification, there have been disclosed typical illustrative embodiments of the invention and, although specific terms are employed, they are used in a generic and descriptive sense only and not for purposes of limitation, the scope of the invention being set forth in the following claims.

## Claims

1. A method of upgrading software in a wireless terminal, the method comprising steps of:
providing an initial version of software in at least one memory (24) in the wireless terminal (10); then
transferring a software upgrade package into the at least one memory (24) by a manufacturer of the wireless terminal (10); then
generating (408) an upgraded version of software in the wireless terminal from the initial version of software and the software upgrade package in response to a predetermined event that occurs with use of the wireless terminal (10) by an end user and before the wireless terminal registers with a wireless operator for a first time; and
operating (410) the wireless terminal (10) according to the upgraded version of software to register the wireless terminal (10) with a wireless operator for a first time.

2. A method as claimed in claim 1, wherein generating an upgraded version of software in the wireless terminal (10) is in response to the wireless terminal (10) being supplied with power for a first time.

3. A method as claimed in claim 1, wherein operating the wireless terminal (10) comprises formatting communication signals according to a wireless communication protocol defined by the upgraded version of software.

4. A method as claimed in claim 3, further comprising precluding (402) formatting of communication signals during the step of generation (408) an upgraded version of software.

5. A method as claimed in claim 2, further comprising supplying power to the wireless terminal (10) from a removable battery, and wherein the step of generating an upgraded version of software in the wireless terminal (10) is in response to supplying power to the wireless terminal (10) from the removable battery for a first time.

6. A method as claimed in claim 1, further comprising determining whether the software upgrade package contains errors, and wherein generating an upgraded version of software in the wireless terminal (10) is based on the determination of whether the software upgrade package contains errors.

7. A method as claimed in claim 1, further comprising determining whether the software upgrade package is authentic (406), and wherein generating an upgraded version of software in the wireless terminal is based on the determination of whether the software upgrade package is authentic.

8. A method as claimed in claim 7, wherein determining whether the software upgrade package is authentic comprises receiving an authorization key from a user, and comparing the authorization key to an authentication code in the wireless terminal.

9. A method as claimed in claim 7, wherein determining whether the software upgrade package is authentic comprises comparing an authentication key in the software upgrade package with an authentication code in the wireless terminal (10).

10. A method as claimed in claim 9, wherein the authentication key uniquely identifies the wireless terminal (10).

11. A method as claimed in claim 9, wherein the authentication key uniquely identifies a manufacturer of the software upgrade package.

12. A method as claimed in claim 7, wherein determining whether the software upgrade package is authentic comprises decrypting the software upgrade package.

13. A method as claimed in claim 1, further comprising generating the software upgrade package outside the wireless terminal (10) from a comparison of the initial version of software and a reference upgraded version of the software.

14. A method as claimed in claim 13, wherein generating an upgraded version of software comprises transforming the initial version of software into the upgraded version of software according to instructions in the software upgrade package.

15. A method as claimed in claim 1, further comprising:
generating in the wireless terminal an indication to a user of the availability of an upgraded version of the software in the wireless terminal (10), and wherein generating an upgraded version of software is in response to an instruction from a user.

16. A wireless terminal (10) comprising:
at least one memory (24)containing an initial version of software;
a download controller (300) that is configured to transfer a software upgrade package into the at least one memory (24);
an upgrade controller (302) that is configured to generate an upgraded version of software in the at least one memory (24) from the initial version of software and the software upgrade package in response to a predetermined event that occurs with use of the wireless terminal (10) by an end user and before the wireless terminal (10) registers with a wireless operator for a first time; and
an operational controller (304) that is configured to operate the wireless terminal (10) according to the upgraded version of software to register the wireless terminal (10) with a wireless operator for a first time.

17. A wireless terminal as claimed in claim 16, wherein the upgrade controller (302) is further configured to generate the upgraded version of software in response to the wireless terminal (10) being supplied with power for a first time.

18. A wireless terminal as claimed in claim 16, wherein the operational controller (304) is further configured to format communication signals according to a wireless communication protocol defined by the upgraded version of software.

19. A wireless terminal as claimed in claim 16, wherein the upgrade controller (302) is further configured to generate the upgraded version of software in response to receiving power from a removable battery for a first time.

20. A wireless terminal as claimed in claim 16, wherein the upgrade controller (302) is further configured to determine whether the software upgrade package contains errors, and to generate the upgraded version of software based on whether the software upgrade package contains errors.

21. A wireless terminal as claimed in claim 16, wherein the upgrade controller (302) is further configured to determine whether the software upgrade package is authentic, and to generate the upgraded version of software based on whether the software upgrade package is authentic.

22. A wireless terminal as claimed in claim 16, wherein the upgrade controller (302) is further configured to transform the initial version of software into the upgraded version of software according to instructions in the software upgrade package.

## Patentansprüche

1. Verfahren eines Upgradens (Herausstufen) von Software in einem drahtlosen Endgerät, wobei das Verfahren die Schritte umfasst:
Bereitstellen einer Anfangsversion einer Software in zumindest einem Speicher (24) in dem drahtlosen Endgerät (10); dann
Übertragen eines Software-Upgrade-Paketes in den zumindest einen Speicher (24) durch einen Hersteller des drahtlosen Endgerätes (10); dann
Erzeugen (408) einer upgegradeten Version einer Software in dem drahtlosen Endgerät von der Anfangsversion einer Software und des Software-Upgrade-Paketes in Reaktion auf ein vorbestimmtes Ereignis, das bei der Verwendung des drahtlosen Endgerätes (10) durch einen Endbenutzer auftritt und bevor das drahtlose Endgerät sich bei einem drahtlosen Betreiber für ein erstes Mal registriert; und
Betreiben (410) des drahtlosen Endgerätes (10) gemäß der upgegradeten Version einer Software, um das drahtlose Endgerät (10) bei einem drahtlosen Betreiber für ein erstes Mal zu registrieren.

2. Verfahren nach Anspruch 1, wobei ein Erzeugen einer upgegradeten Version einer Software in dem drahtlosen Endgerät (10) in Reaktion auf das drahtlose Endgerät (10) stattfindet, das für ein erstes Mal mit Leistung versorgt wird.

3. Verfahren nach Anspruch 1, wobei ein Betreiben des drahtlosen Endgerätes (10) ein Formatieren von Kommunikationssignalen gemäß einem drahtlosen Kommunikationsprotokoll umfasst, das durch die upgegradete Version von Software definiert wird.

4. Verfahren nach Anspruch 3, weiter mit Ausschließen (402) eines Formatierens von Kommunikationssignalen während dem Schritt einer Erzeugung (408) einer upgegradeten Version einer Software.

5. Verfahren nach Anspruch 2, weiter mit eine Zuführen von Leistung zu dem drahtlosen Endgerät (10) von einer entfernbaren Batterie und wobei der Schritt eines Erzeugens einer upgegradeten Version einer Software in dem drahtlosen Endgerät (10) in Reaktion auf ein Zuführen von Leistung zu dem drahtlosen Endgerät (10) von der entfernbaren Batterie für ein erstes Mal stattfindet.

6. Verfahren nach Anspruch 1, weiter mit einem Bestimmen, ob das Software-Upgrade-Paket Fehler umfasst, und wobei ein Erzeugen einer upgegradeten Version einer Software in dem drahtlosen Endgerät (10) auf einer Bestimmung basiert, ob das Software-Upgrade-Paket Fehler enthält.

7. Verfahren nach Anspruch 1, weiter mit einem Bestimmen, ob das Software-Upgrade-Paket authentisch ist (406) und wobei ein Erzeugen einer upgegradeten Version von Software in dem drahtlosen Endgerät auf einer Bestimmung basiert, ob das Software-Upgrade-Paket authentisch ist.

8. Verfahren nach Anspruch 7, wobei ein Bestimmen, ob das Software-Upgrade-Paket authentisch ist, ein Empfangen eines Autorisierungsschlüssels von einem Benutzer und ein Vergleichen des Autorisierungsschlüssels mit einem Autorisierungscode in dem drahtlosen Endgerät umfasst.

9. Verfahren nach Anspruch 7, wobei ein Bestimmen, ob das Software-Upgrade-Paket authentisch ist, ein Vergleichen eines Authentifizierungsschlüssels in dem Software-Upgrade-Paket mit einem Authentifizierungscode in dem drahtlosen Endgerät (10) umfasst.

10. Verfahren nach Anspruch 9, wobei der Authentifizierungsschlüssel eindeutig das drahtlose Endgerät (10) identifiziert.

11. Verfahren nach Anspruch 9, wobei der Authentifizierungsschlüssel eindeutig einen Hersteller des Software-Upgrade-Paketes identifiziert.

12. Verfahren nach Anspruch 7, wobei ein Bestimmen, ob das Software-Upgrade-Paket authentisch ist, ein Entschlüsseln des Software-Upgrade-Paketes umfasst.

13. Verfahren nach Anspruch 1, weiter mit einem Erzeugen des Software-Upgrade-Paketes außerhalb des drahtlosen Endgerätes (10) aus einem Vergleich der Anfangsversion einer Software und einer upgegradeten Referenzversion der Software.

14. Verfahren nach Anspruch 13, wobei ein Erzeugen einer upgegradeten Version einer Software ein Transformieren der Anfangsversion einer Software in die upgegradete Version einer Software gemäß Anweisungen in dem Software-Upgrade-Paket umfasst.

15. Verfahren nach Anspruch 1, weiter mit:
Erzeugen in dem drahtlosen Endgerät einer Anzeige an einen Benutzer der Verfügbarkeit einer upgegradeten Version der Software in dem drahtlosen Endgerät (10) und wobei ein Erzeugen einer upgegradeten Version einer Software in Reaktion auf eine Anweisung von einem Benutzer stattfindet.

16. Drahtloses Endgerät (10), mit:
zumindest einem Speicher (24), der eine Anfangsversion von Software umfasst;
einem Download-Steuergerät (300), das konfiguriert ist, ein Software-Upgrade-Paket in den zumindest einen Speicher (24) zu übertragen;
einem Upgrade-Steuergerät (302), das konfiguriert ist, eine upgegradete Version einer Software in dem zumindest einem Speicher (24) aus der Anfangsversion einer Software und dem Software-Upgrade-Paket in Reaktion auf ein vorbestimmtes Ereignis zu erzeugen, das bei der Verwendung des drahtlosen Endgerätes (10) durch einen Endbenutzer auftritt, und bevor sich das drahtlose Endgerät (10) bei einem drahtlosen Betreiber für ein erstes Mal registriert; und
einem Betriebssteuergerät (304), das konfiguriert ist, das drahtlose Endgerät (10) gemäß der upgegradeten Version einer Software zu betreiben, um das drahtlose Endgerät (10) bei einem drahtlosen Betreiber für ein erstes Mal zu registrieren.

17. Drahtloses Endgerät nach Anspruch 16, wobei das Upgrade-Steuergerät (302) weiter konfiguriert ist, die upgegradete Version einer Software in Reaktion auf das drahtlose Endgerät (10) zu erzeugen, das mit Leistung für ein erstes Mal versorgt wird.

18. Drahtloses Endgerät nach Anspruch 16, wobei das Betriebssteuergerät (304) weiter konfiguriert ist, Kommunikationssignale gemäß einem drahtlosen Kommunikationsprotokoll zu formatieren, das durch die upgegradete Version einer Software definiert wird.

19. Drahtloses Endgerät nach Anspruch 16, wobei das Upgrade-Steuergerät (302) weiter konfiguriert ist, eine die upgegradete Version einer Software in dem drahtlosen Endgerät (10) in Reaktion auf ein Empfangen von Leistung von einer entfernbaren Batterie für ein erstes Mal zu erzeugen.

20. Drahtloses Endgerät nach Anspruch 16, wobei das Upgrade-Steuergerät (302) weiter konfiguriert ist, zu bestimmen, ob das Software-Upgrade-Paket Fehler umfasst, und die upgegradete Version einer Software basierend darauf zu erzeugen, ob das Software-Upgrade-Paket Fehler enthält.

21. Drahtloses Endgerät nach Anspruch 16, wobei das Upgrade-Steuergerät (302) weiter konfiguriert ist, zu bestimmen, ob das Software-Upgrade-Paket authentisch ist, und die upgegradete Version einer Software basierend darauf zu erzeugen, ob das Software-Upgrade-Paket authentisch ist.

22. Drahtloses Endgerät nach Anspruch 16, wobei das Upgrade-Steuergerät (304) weiter konfiguriert ist, die Anfangsversion einer Software in die upgegradete Version einer Software gemäß Anweisungen in dem Software-Upgrade-Paket zu transformieren.

## Revendications

1. Procédé de mise à jour d'un logiciel sur un terminal sans fil, le procédé comprenant les étapes consistant à :
fournir une version initiale du logiciel dans au moins une mémoire (24) du terminal sans fil (10) ; puis
transférer un paquetage de mise à jour du logiciel dans ladite au moins une mémoire (24) par un constructeur du terminal sans fil (10) ; puis
produire (408) une version mise à jour du logiciel sur le terminal sans fil à partir de la version initiale du logiciel et du paquetage de mise à jour du logiciel en réponse à un événement prédéterminé qui se produit à l'utilisation du terminal sans fil (10) par un utilisateur et avant que le terminal sans fil ne s'enregistre auprès d'un opérateur sans fil pour la première fois ; et
faire fonctionner (410) le terminal sans fil (10) avec la version mise à jour du logiciel pour enregistrer le terminal sans fil (10) auprès de l'opérateur sans fil pour la première fois.

2. Procédé selon la revendication 1, dans lequel l'étape de production d'une version mise à jour du logiciel sur le terminal sans fil (10) se fait en réponse au fait que le terminal sans fil (10) est mis sous tension pour la première fois.

3. Procédé selon la revendication 1, dans lequel l'étape fonctionnement du terminal sans fil (10) comprend le formatage des signaux de communication selon un protocole de communication sans fil défini par la version mise à jour du logiciel.

4. Procédé selon la revendication 3, comprenant en outre l'étape consistant à empêcher (402) le formatage de signaux de communication pendant l'étape de production (408) d'une version mise à jour du logiciel.

5. Procédé selon la revendication 2, comprenant en outre l'étape consistant à fournir une alimentation électrique au terminal sans fil (10) à partir d'une batterie amovible et dans lequel l'étape de production d'une version mise à jour du logiciel sur le terminal sans fil (10) se fait en réponse au fait que le terminal sans fil (10) reçoit une alimentation électrique de la batterie amovible pour la première fois.

6. Procédé selon la revendication 1, comprenant en outre l'étape consistant à déterminer si le paquetage de mise à jour du logiciel contient des erreurs et dans lequel l'étape de production d'une version mise à jour du logiciel sur le terminal sans fil (10) est basée sur la détermination que le paquetage de mise à jour du logiciel contient ou non des erreurs.

7. Procédé selon la revendication 1, comprenant en outre l'étape consistant à déterminer si le paquetage de mise à jour du logiciel est authentique (406) et dans lequel l'étape de production d'une version mise à jour du logiciel sur le terminal sans fil se fonde sur la détermination que le paquetage de mise à jour du logiciel est authentique ou non.

8. Procédé selon la revendication 7, dans lequel l'étape de détermination que le paquetage de mise à jour du logiciel est authentique ou non comprend l'étape consistant à recevoir une clef d'autorisation d'un utilisateur et à comparer la clef d'autorisation avec un code d'authentification sur le terminal sans fil.

9. Procédé selon la revendication 7, dans lequel l'étape de détermination que le paquetage de mise à jour du logiciel est authentique ou non comprend l'étape consistant à comparer une clef d'authentification dans le paquetage de mise à jour du logiciel avec un code d'authentification sur le terminal sans fil (10).

10. Procédé selon la revendication 9, dans lequel la clef d'authentification identifie le terminal sans fil (10) de manière univoque.

11. Procédé selon la revendication 9, dans lequel la clef d'authentification identifie un producteur du paquetage de mise à jour du logiciel de manière univoque.

12. Procédé selon la revendication 7, dans lequel l'étape de détermination que le paquetage de mise à jour du logiciel est authentique ou non comprend l'étape consistant à déchiffrer le paquetage de mise à jour du logiciel.

13. Procédé selon la revendication 1, comprenant en outre l'étape consistant à produire le paquetage de mise à jour du logiciel en dehors du terminal sans fil (10) à partir d'une comparaison de la version initiale du logiciel et d'une version mise à jour de référence du logiciel.

14. Procédé selon la revendication 13, dans lequel l'étape de production d'une version mise à jour du logiciel comprend l'étape consistant à transformer la version initiale du logiciel en une version mise à jour du logiciel sur la base d'instructions placées dans le paquetage de mise à jour du logiciel.

15. Procédé selon la revendication 1, comprenant en outre l'étape consistant à : produire sur le terminal sans fil une indication, destinée à un utilisateur, de la disponibilité d'une version mise à jour du logiciel sur le terminal sans fil (10) et dans lequel l'étape de production d'une version mise à jour du logiciel se fait en réponse à une instruction d'un utilisateur.

16. Terminal sans fil (10), comprenant :
au moins une mémoire (24) contenant une version initiale du logiciel ;
un contrôleur de téléchargement (300), configuré pour transférer un paquetage de mise à jour du logiciel dans ladite au moins une mémoire (24) ;
un contrôleur de mise à jour (302), configuré pour produire une version mise à jour du logiciel dans ladite au moins une mémoire (24) à partir de la version initiale du logiciel et du paquetage de mise à jour du logiciel, en réponse à un événement prédéterminé qui se produit dans l'utilisation du terminal sans fil (10) par un utilisateur et avant que le terminal sans fil ne s'enregistre auprès d'un opérateur sans fil pour la première fois ; et
un contrôleur opérationnel (304), configuré pour faire fonctionner le terminal sans fil (10) avec la version mise à jour du logiciel pour enregistrer le terminal sans fil (10) auprès de l'opérateur sans fil pour la première fois.

17. Terminal sans fil selon la revendication 16, dans lequel le contrôleur de mise à jour (302) est en outre configuré pour produire la version mise à jour du logiciel en réponse au fait que le terminal sans fil (10) est mis sous tension pour la première fois.

18. Terminal sans fil selon la revendication 16, dans lequel le contrôleur opérationnel (304) est en outre configuré pour formater des signaux de communication selon un protocole de communication sans fil défini par la version mise à jour du logiciel.

19. Terminal sans fil selon la revendication 16, dans lequel le contrôleur de mise à jour (302) est en outre configuré pour produire la version mise à jour du logiciel en réponse au fait qu'il reçoit une alimentation électrique d'une batterie amovible pour la première fois.

20. Terminal sans fil selon la revendication 16, dans lequel le contrôleur de mise à jour (302) est en outre configuré pour déterminer si le paquetage de mise à jour du logiciel contient des erreurs et pour produire la version mise à jour du logiciel suivant que le paquetage de mise à jour du logiciel contient ou non des erreurs.

21. Terminal sans fil selon la revendication 16, dans lequel le contrôleur de mise à jour (302) est en outre configuré pour déterminer si le paquetage de mise à jour du logiciel est authentique, et pour produire la version mise à jour du logiciel sur le terminal suivant que le paquetage de mise à jour du logiciel est authentique ou non.

22. Terminal sans fil selon la revendication 16, dans lequel le contrôleur de mise à jour (302) est en outre configuré pour transformer la version initiale du logiciel en une version mise à jour du logiciel sur la base d'instructions placées dans le paquetage de mise à jour du logiciel.
